## Europäisches Patentamt

## European Patent Office

## Office européen des brevets

(19)

(11) **EP 1 152 522 A2**

(12) **EUROPÄISCHE PATENTANMELDUNG**

(43) Veröffentlichungstag:
**07.11.2001 Patentblatt 2001/45**

(51) Int Cl.⁷: $H02N\ 2/02$, $H02N\ 2/10$

(21) Anmeldenummer: **01108405.0**

(22) Anmeldetag: **03.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **05.05.2000 DE 10021863**

(71) Anmelder: **SIEMENS AKTIENGESELLSCHAFT**
**80333 München (DE)**

(72) Erfinder:
- **Fleischer, Maximilian, Dr.**
  **85635 Höhenkirchen (DE)**
- **Frank, Joachim, Dr.**
  **85521 Ottobrunn (DE)**
- **Freitag, Reinhard**
  **81379 München (DE)**
- **Meixner, Hans, Prof. Dr.**
  **85540 Haar (DE)**

(54) **Elektromechanischer Stellantrieb**

(57)    Der elektromechanische Stellantrieb weist mindestens einen ersten elektromechanischen Aktuator (2) und einen davon räumlich getrennten zweiten elektromechanischen Aktuator (3) auf sowie einen Transmitterkörper (1), der auf den Aktuatoren (2,3) aufsitzt, wobei ein Hub ($dl_2$, $dl_3$) der Aktuatoren (2,3) in Richtung des Transmitterkörper (1) steuerbar ist.

FIG 1

EP 1 152 522 A2

**Beschreibung**

Die Erfindung betrifft einen elektromechanisch antreibbaren Stellantrieb, Motoren unter Verwendung dieses Stellantriebs sowie ein Verfahren zum Betrieb des Stellantriebs.

Im Zuge der fortschreitenden technischen Entwicklung findet sich die Tendenz, eine Vielzahl von Vorgängen und Prozessen durch Automatisierung optimal zu fahren. Während in den ersten beiden benötigten Gliedern der dazu benötigten Systemeden Meßwertaufnehmern (Sensoren) für physikalische und chemische Größen sowie den für die Informationsverarbeitung benötigten Elektroniken - durch den Einsatz neuer Technologien beträchtliche Fortschritte erzielt wurden, beruhen die für mechanische Verstellungen benötigten Aktoren weitgehend noch auf der zwar gut erprobten, jedoch limitierten Technologie elektromagnetischer Stellantriebe.

Bei einem elektromagnetischen Stellantrieb wird, um langsame Drehungen bei hohem Moment zu realisieren, ein schnell drehender elektromagnetischer Motor mit einem Untersetzungsgetriebe kombiniert. Dies bedingt zwangsläufig relativ große Bauformen und hohes Gewicht, lange Start-Stop-Zeiten (das Trägheitsmoment des Rotors muß auf hohe Drehzahlen beschleunigt werden) sowie ein nicht zu vernachlässigendes Spiel und Preis des starken Untersetzungsgetriebes.

Aus DE 38 33 342 bekannt ist ein piezoelektrischer Stellantriebe, der auf dem Prinzip des inversen piezoelektrischen Effekt gründet. Hier ist jedoch das Grundproblem zu lösen, daß nur eine geringe Antriebslänge realisierbar ist: Durch die Volumenänderung des Piezoeffekts sind typischerweise maximale Antriebslängen von 1/1000 der Piezoaktorabmessungen möglich, d.h. bei typischen Aktorlängen von 0,5 cm bis 5 cm, insbesondere um 20 µm, stehen Bewegungswege von 5 µm bis 50 µm zur Verfügung. Zudem sind einer hohen Wiederholfrequenz der Antriebsschritte Grenzen gesetzt, da bei Frequenzen im kHz-Bereich starke Schallabstrahlungen auftreten (20 µm · 1000/s = 20 mm/s). Zur Realisierung von relativ langsam drehenden (50 U/min) oder verstellenden (1 cm/s) Antrieben ist eine erhebliche Transformation der Bewegungsamplitude nötig.

Beispielsweise DE 38 33 342 verwendet neben einer sehr hohen Wiederholfrequenz der Bewegung im Ultraschallbereich (20-40 kHz) eine Amplitudentransformation der Primäramplitude durch die Verwendung resonanter Aktoren. Mit der Piezokeramik wird so bei geringer Bewegungsamplitude am Knotenpunkt der Schwingung eine resonante Schwingung eines Körpers angeregt, wodurch am Schwingungsbauch eine typischerweise um den Faktor 50 erhöhte Bewegungsamplitude zu Verfügung steht. In der Praxis hat sich jedoch der resonante Betrieb als kritisch erwiesen. Zur Erzielung einer hohen Amplitudentransformation müssen Resonatoren hoher Güte verwendet werden, so daß die Resonanz äußerst schmalbandig wird. Dadurch ergeben sich schwer überwindliche Schwierigkeiten bei der Ansteuerung, wenn die Resonanzfrequenz z.B. durch Temperaturänderungen oder Änderungen des Belastungszustandes schwankt. Außerdem sind bei der Fertigung sehr geringe Toleranzen einzuhalten.

Es ist die Aufgabe der vorliegenden Erfindung, eine Möglichkeit für einen kostengünstigen, kompakten und leichten Antrieb mit geringem Spiel bereitzustellen.

Diese Aufgabe wird durch einen Stellantrieb gemäß Patentanspruch 1, durch einen Motor gemäß Patentanspruch 9 sowie durch ein Antriebsverfahren gemäß Patentanspruch 12 gelöst. Vorteilhafte Ausgestaltungen sind den Unteransprüchen entnehmbar.

Dazu weist ein elektromechanischer Stellantrieb mindestens einen ersten elektromechanischen Aktuator und einen davon räumlich getrennten zweiten elektromechanischen Aktuator auf. Dabei weist ein elektromechanischer Aktuator mindestens ein elektromechanisches Element auf. Unter einem elektromechanischen Element wird ein Körper verstanden, bei dem ein Volumen durch Anlegen eines elektrischen Signals (Strom, Spannung etc.) gedehnt wird, wodurch sich ein Hub des Aktuators ergibt.

Beispiele für elektromechanische Elemente sind elektrostriktive Elemente, magnetostriktive Elemente (z. B. inclusive einer elektrischen Windung) oder piezoelektrische Elemente. Diese Elemente haben gemeinsam, daß sie sehr präzise ansteuerbar sind und hohe Druckkräfte aufbringen können. Andererseits ist ihnen ein in Vergleich zur Bauteillänge geringer Hub dl gemein, der ihre direkte Anwendung einschränkt.

Weiterhin ist ein Transmitterkörper vorhanden der auf den Aktuatoren aufsitzt. Eine Dehnung der Aktuatoren in Richtung des Transmitterkörpers ist steuerbar, z. B. durch Anlegen einer elektrischen Spannung. Der Hub dl der Aktuatoren kann durch Einsatz des Transmitterkörpers transformiert, d.h. in der Regel stark vergrößert, werden. Der Transmitterkörper wirkt dabei als nichtresonant betriebener biaktiver Hebel. Ein Abtriebskörper wird bei Vorliegen eines Friktionskontaktes mit dem Transmitterkörper mitgeführt.

Durch den Hub der Aktuatoren können drei Funktionen realisiert werden: ein Andruck einer Fläche des Transmitterkörpers auf dem Abtriebskörper zum Schließen des Friktionskontaktes, ein Antrieb des Abtriebskörpers bei geschlossenem Friktionskontakt und ein Lösen des Kontaktes zwischen Transmitterkörper und Abtriebskörper. Dadurch ist z.B. ein intermittierendes Schließen des Friktionskontaktes zur schrittweisen Bewegung des Abtriebskörpers möglich.

Es ist auch der Einsatz mehrerer elektromechanischer Stellantriebe zum Antrieb eines Abtriebskörpers möglich. Ebenso können mittels eines elektromechanischen Stellantriebs mehrere Abtriebskörper angetrieben werden.

Die Steuerung der Dehnung ist nicht eingeschränkt, kann also separat oder gekoppelt erfolgen. In der Regel werden die Aktuatoren elektronisch angesteuert werden.

Für den elektromechanischen Stellantrieb ergeben sich unter anderem folgende Vorteile:

- hohe Übersetzung des Hubs der Aktuatoren,
- einfacher Aufbau,
- durch die nichtresonante Ausführung ist keine besondere Maßhaltung/Toleranz in der Fertigung erforderlich.
- es sind die vier Betriebszustände: Linkslauf, Rechtslauf, Blockieren, Freilauf einstellbar,
- eine Drehgeschwindigkeit ist flexibel, z. B. elektronisch, regelbar,
- eine maximale Kraftübertragung (Drehgeschwindigkeit / Drehmoment) und Antriebsgeschwindigkeit ist durch eine Geometrieanpassung sehr einfach einstellbar, d.h. ein Antrieb eines Motors ist problemlos skalierbar.

Der Transmitterkörper ist vorzugsweise steif ausgeführt.

Es ist vorteilhaft, wenn die Aktuatoren nach einem magnetostriktiven, einem elektrostriktiven oder insbesondere einem piezoelektrischen Prinzip antreibbar sind.

Dabei ist es zur einfachen Herstellung, hohen Zuverlässigkeit und besonders präzisen Ansteuerung günstig, wenn die Aktuatoren in Form eines Vielschicht-Piezoaktors vorliegen, insbesondere in Niedervolttechnik.

Zur Vermeidung schädlicher Zugspannungen, insbesondere bei keramischen elektromechanischen Elementen, ist es günstig, wenn die Aktuatoren unter einer Druckvorspannung stehen.

Es ist besonders vorteilhaft, wenn der Transmitterkörper mittels eines Federelementes auf die Aktuatoren gedrückt wird, weil so gleichzeitig ein guter Sitz des Transmitterkörpers auf den Aktuatoren und eine Druckvorspannung der Aktuatoren erreicht werden kann. Gleichzeitig sind Effekte thermischer Ausdehnung ausgleichbar.

Es ist auch günstig, wenn der Transmitterkörper eine keilförmige Querschnittsfläche aufweist, wobei er mit einer Bodenfläche auf den Aktuatoren aufsitzt, weil sich so ein einfach ansteuerbarer und vielseitig einsetzbarer Stellantrieb ergibt.

Dabei ist es zur Verringerung eines Abriebs und zur Vergrößerung des Friktionskontaktes vorteilhaft, wenn die der Bodenfläche gegenüberliegende Antriebsspitze abgeflacht ist.

Zur Gewährleistung eines guten Kontakts zwischen dem Transmitterkörper und den Aktuatoren über den gesamten Bewegungsbereich des Transmitterkörpers ist es günstig, wenn zwischen den Aktuatoren und dem Transmitterkörper jeweils ein Übertragerelement zur verbesserten Kontaktauflage vorhanden ist. Das Übertragerelement kann z.B. eine Kugelscheibe mit Sitz sein.

Bei einem Motor, der einen elektromechanischen Stellantrieb nach dem oben beschriebenen Prinzip aufweist, ist also eine Bewegung eines Abtriebskörpers mittels einer durch einen Friktionskontakt übertragenen Bewegung des Transmitterkörpers steuerbar.

Dabei ist es vorteilhaft, wenn der Motor einen Abtriebskörper aufweist, der mittels der durch den Friktionskontakt übertragenen Bewegung des Transmitterkörpers drehbar ist, z. B. eine Welle.

Es kann auch günstig sein, wenn der Motor einen Abtriebskörper aufweist, welcher mittels der durch den Friktionskontakt übertragenen Bewegung des Transmitterkörpers linearverschiebbar ist, z.B. einen Kolben oder ein Blech. Der Abtriebskörper kann auch durch den mindestens einen Stellantrieb sowohl drehbar als auch linearverschiebbar sein.

Bei einem Verfahren zum Betrieb des Stellantriebs wird ein Hub $dl_2$ des ersten Aktuators und ein Hub $dl_3$ des zweiten Aktuators jeweils periodisch verändert, so daß sich ein regelmäßiger Antrieb ergibt. Es sind aber auch andere, z. B. nicht-periodische, Bewegungen möglich.

Es ist besonders vorteilhaft, wenn der Hub $dl_2$ des ersten Aktuators 2 gemäß der Gleichung $dl_2 = dl_0 \cdot \sin(\omega \cdot t)$ eingestellt wird, und der Hub $dl_3$ des zweiten Aktuators gemäß der Gleichung $dl_3 = dl_0 \cdot \sin(\omega \cdot t + \phi)$ eingestellt wird, wobei $dl_0$ eine Amplitude, z. B. den maximalen Hub, darstellt. $\omega$ entspricht einer Kreisfrequenz und $\phi$ einem Phasenwinkel. Bei einem piezoelektrischen Stellelement ist ein solcher Hub durch eine analoge Einstellung der an den Piezoelementen anliegenden Ansteuerspannung einstellbar, weil sich die Ansteuerspannung und der Hub in guter Näherung linear zueinander verhalten.

Zum Herstellung eines hohen Vortriebs des Abtriebkörpers ist es vorteilhaft, wenn der Phasenwinkel $\phi = 180°$ oder $\phi = -180°$ beträgt.

Als ein Anwendungsgebiet eines solches Stellantriebs ist das sogenannte automatisierte Haus gegeben:

| Anwendung | Anforderungen |
|---|---|
| Öffnen/Schliessen von Fenstern/Türen | Kompakt, kostengünstig, relativ hohe Drehmomente, spielfrei |

(fortgesetzt)

| Anwendung | Anforderungen |
|---|---|
| Betätigen von Feuerschutzklappen | Kostengünstig, hochverläßlich/Selbstüberprüfung, extrem kurze Laufzeit |
| Betätigen von Klappen/Ventilen in Lüftungssytemen | Kompakte Bauweise, Kostengünstig, häufiger Betrieb |

Ein weiteres Anwendungsgebiet liegt auf dem Gebiet der Industrietechnik:

| Anwendung | Anforderungen |
|---|---|
| Roboterarme | Kompakte Bauweise, leicht, schnell relativ hohe Laufzeit, spielfrei |
| Positionierung, z. B. in Bestückungsautomaten | Kompakte Bauweise, leicht, schnell relativ hohe Laufzeit, spielfrei |
| Ventilverstellung | schnell, Spielfreiheit, |

Auch ein Einsatz in der Automobiltechnik ist möglich:

| Anwendung | Anforderungen |
|---|---|
| Fensterheber | Kompakte Bauweise (flach), leicht, schnell; Quetscherkennung |
| Scheibenwischerantrieb | Kompakte Bauweise (getrennt), leicht, schnell, relativ hohe Laufzeit, kräftig |
| Sitzverstellung | Kompakt und leicht, Spielfreiheit, relativ kurze Laufzeit |

Ein weiteres Anwendungsgebiet ist der Autofocusantrieb in Kameraobjektiven (EOS von CANON) bei der im wesentlichen die Kriterien extrem schnell, kompakt und leicht gelten.

Selbstverständlich sind die angeführten Beispiele von Anwendungsgebieten nicht abschließend, sondern zeigen nur einige vorteilhafte Anwendungen auf.

In den folgenden Ausführungsbeispielen wird der Stellantrieb schematisch näher ausgeführt.

Figur 1       zeigt eine Ausführungsform eines mit einem elektromechanischen Stellantrieb angetriebenen Motors,

Figur 2       zeigt Bewegungen der Antriebsspitze für verschiedene Phasenwinkel $\phi$,

Figuren 3a bis 3c       zeigt Stellantriebe mit unterschiedlichen Transmitterkörpern,

Figur 4       zeigt einen mittels des elektromechanixschen Stellantriebs drehbar angetriebenen Motor,

Figur 5       zeigt einen mittels des elektromechanischen Stellantriebs angetriebenen Linearmotor,

Figur 6       zeigt eine weitere Ausführungsform des drehbar angetriebenen Motors,

Figur 7       zeigt eine weitere Ausführungsform des drehbar angetriebenen Motors.

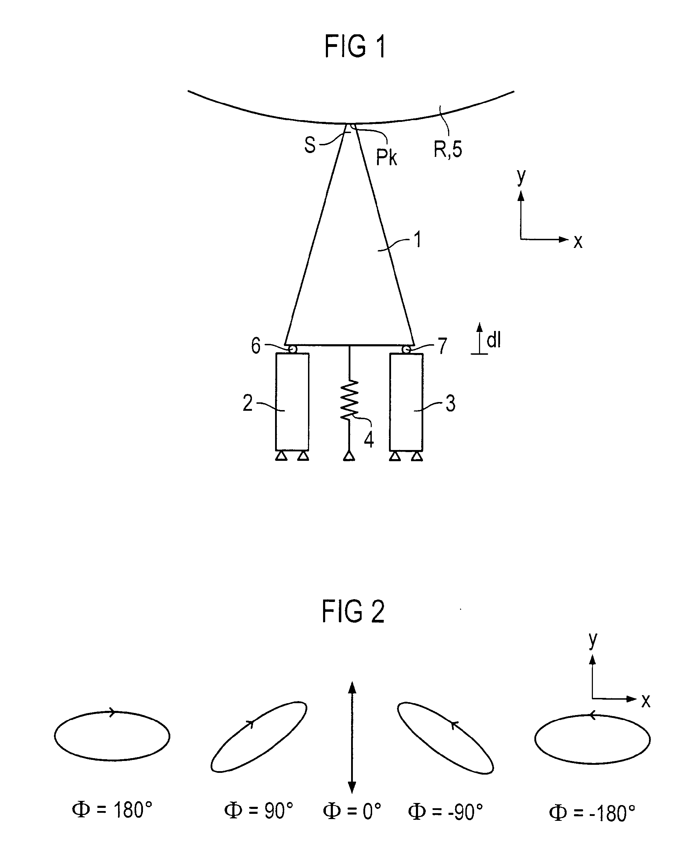

Figur 1 zeigt als Schnittdarstellung in Seitenansicht auf die (x,y)-Ebene einen Motor, der mittels eines elektromechanischen Stellantriebs zu einer Drehbewegung anregbar ist.

Der Stellantrieb besteht aus einem Transmitterkörper 1, einem ersten piezomechanischen Aktuator 2, einem zweiten piezomechanischen Aktuator 3, einem Federelement 4, und zwei Übertragerelementen 6,7. Durch den Stellantrieb wird ein Abtriebskörper 5 des Motors angetrieben. Der Abtriebskörper 5 liegt hier in Form eines Rotors R, z. B. einer Welle, vor, welcher durch die Mitführung mit dem Transmitterkörper 1 zu einer Drehung angeregt wird. Das elektromechanische Element der Aktuatoren 2,3 ist jeweils ein Vielschicht-Piezoaktor in Niedervolttechnik, dessen Hub dl unter Ausnutzung des bekannten $d_{33}$-Längseffektes in Richtung ihrer Längsachse wirkt.

Dabei liegt der Transmitterkörper 1 über das erstes Übertragerelement 6 auf dem ersten Aktuator 2 und über das zweites Übertragerelement 7 auf dem zweiten Aktuator 3 auf. Mittels der Zugspannung des Federelementes 4 wird der Transmitterkörper 1 dergestalt gegen die beiden Aktuatoren 2,3 gezogen, daß der Druck in etwa der Mitte der Arbeitsgeraden der beiden Aktuatoren 2,3 liegt. Dadurch wird einerseits ein sicherer Sitz des Transmitterkörpers 1 auf den Aktuatoren 2,3 gewährleistet und andererseits ist eine Druckvorspannung der piezomechanischen Aktuatoren 2,3 gegeben.

Der Transmitterkörper 1 ist steif ausgeführt. Mit seiner gehärteten Antriebsspitze S kann er im Bereich eines Kontaktpunkts Pk mit dem Rotor R in Friktionskontakt gebracht werden.

Die piezomechanischen Aktuatoren 2,3 sind so ausgerichtet, daß ihr (positiver und/oder negativer) Hub parallel zur y-Achse in Richtung des Transmitterkörpers 1 wirkt.

Die Aktuatoren 2,3 umfassen außer dem Piezoaktor mit seinen elektrischen Anschlüssen auch eine Kopfplatte und eine Fußplatte.

Eine gleichartige Ansteuerung zur Elongation beider Aktuatoren 2,3 bewirkt einen Kraftschluß der Transmitterspitze S auf dem Abtriebskörper R, eine gleichartige Ansteuerung der Aktuatoren 2,3 zur Kontraktion bewirkt ein Öffnen des Friktionskontaktes. Eine ungleichmäßige Ansteuerung beider Aktuatoren 2,3 (z. B. Elongation des ersten Aktuators 2 und Kontraktion des zweiten Aktuators 3) bewirkt eine Bewegung der Antriebspitze S des Transmitterkörpers 1 in Richtung des kontrahierten Aktuators 2,3 (z.B. des zweiten Aktuators 3).

Durch den gleichgerichteten Anteil der Bewegung der beiden Aktuatoren 2,3 wird somit der Andruck bzw. das Öffnen und Schließen des Friktionskontaktes gesteuert, durch den Differenzanteil hingegen der Antrieb des Rotors R senkrecht zur Hubrichtung der Aktuatoren 2,3. Die Antriebsspitze S führt den Rotor R in die gleiche Richtung mit. Beispielsweise wird bei einer Elongation des ersten Aktuators 2 und einer Kontraktion des zweiten Aktuators 3 bei gleichzeitigem Friktionskontakt der Rotor R gegen den Uhrzeigersinn gedreht.

Wenn der Transmitterkörper 1 nach Erreichen des maximalen Hubunterschiedes zwischen den beiden Aktuatoren 2,3 durch Lösen des Kontaktes zum Rotor R wieder an der anfänglichen Position aufgesetzt wird, ergibt sich ein intermittierender Antrieb des Rotors R.

Figur 2 zeigt eine mögliche Bewegungskurve der Kontaktspitze S in der (x,y)-Ebene in Abhängigkeit eines Phasenwinkels $\phi$. Dazu wird der Hub $dl_2$ des ersten Aktuators 2 und der Hub $dl_3$ des zweiten Aktuators 3 gemäß der Gleichungen

$$dl_2 = dl_0 \cdot \sin (\omega \cdot t)$$

$$dl_3 = dl_0 \cdot \sin (\omega \cdot t + \phi) \qquad [1]$$

gesteuert, wobei $dl_0$ hier den maximalen Hub der beiden Aktuatoren 2,3 und $\omega$ eine Kreisfrequenz darstellt. Für manche Anwendungen kann auch ein unterschiedlicher Hub bzw. maximaler Hub $dl_0$ der Einzelaktuatoren 2,3 vorteilhaft sein.

Eine Bewegung gemäß Gl. [1] ist bei einem piezoelektrisch angetriebenen Stellantrieb analog zu einer periodischen Ansteuerspannung $U_2$ bzw. $U_3$ am ersten Aktuator 2 bzw. am zweiten Aktuator 3 mit gleicher Frequenz gemäß

$$U_2 = U_0 \cdot \sin (\omega \cdot t)$$

$$U_3 = U_0 \cdot \sin (\omega \cdot t + \phi). \qquad [2]$$

Bei einer Phasenverschiebung von $\phi$ = 180° bzw. -180° (gegengerichtete Ansteuerung) liegt als Bewegungskurve der Antriebspitze S eine Ellipse vor. Die dabei gegebene Abweichung von der Kreisform ist durch die Geometrie des Transmitterkörpers 1 einstellbar. Ein Phasenwinkel $\phi$ = 180° bzw. -180° entspricht einen maximalen Drehzahl bzw. Translationsgeschwindigkeit des Motors.

Die Größe der Bewegung der Antriebsspitze S in x-Richtung ("x-Hub") ist direkt durch eine Wahl der Geometrie des Transmitterkörpers 1 einstellbar, insbesondere durch das Verhältnis von Höhe zu Breite. Dadurch wird es möglich, daß der x-Hub des Transmitterkörpers 1 um ein Vielfaches größer ist als der maximale Hubs dl der Aktuatoren 2,3. Dies entspricht einer Hubübersetzung mit Änderung der Bewegungsrichtung. Die Aktuatoren 2,3 werden dabei in der Regel vorteilhafterweise nur unwesentlich gebogen, insbesondere, wenn die Übertragerelemente 6,7 frei beweglich gelagert sind.

Wie aus dieser Figur zu erkennen ist, bewirkt die Bewegungskurve ein weiches Aufsetzen der Antriebspitze S auf dem Abtriebskörper 5,R,S. Damit tritt das bei bisherigen monomodalen Motorprinzipien bekannte und schwierig zu behebende Problem des Verschleißes am Friktionskontakt nicht signifikant in Erscheinung.

Bei Abweichungen von diesen Werten des Phasenwinkels $\phi$ liegt ein Antrieb des Abtriebskörpers 5,R,S mit verminderter Geschwindigkeit vor. Bei einer Phasenlage von $\phi$ = 0° liegt kein Antrieb vor, obwohl zwischenzeitlich der Friktionskontakt geöffnet wird. Dies erlaubt die Realisierung eine Freilaufzustandes (aktive Entblockierung) in einem elektromechanischen Motor, der ansonsten im ausgeschalteten Zustand die Bewegung mit dem maximalen Haltemoment blockiert.

Es sind auch andere als sinusförmige Ansteuerspannungen möglich. Auch ist es beispielsweise zur Realisierung einer dreidimensionalen Bewegungskurve möglich, einen Transmitterkörper 1,1',1" mit mehr als zwei Aktuatoren 2,3 auszustatten oder Aktuatoren 2,3 gegeneinander zu verkippen.

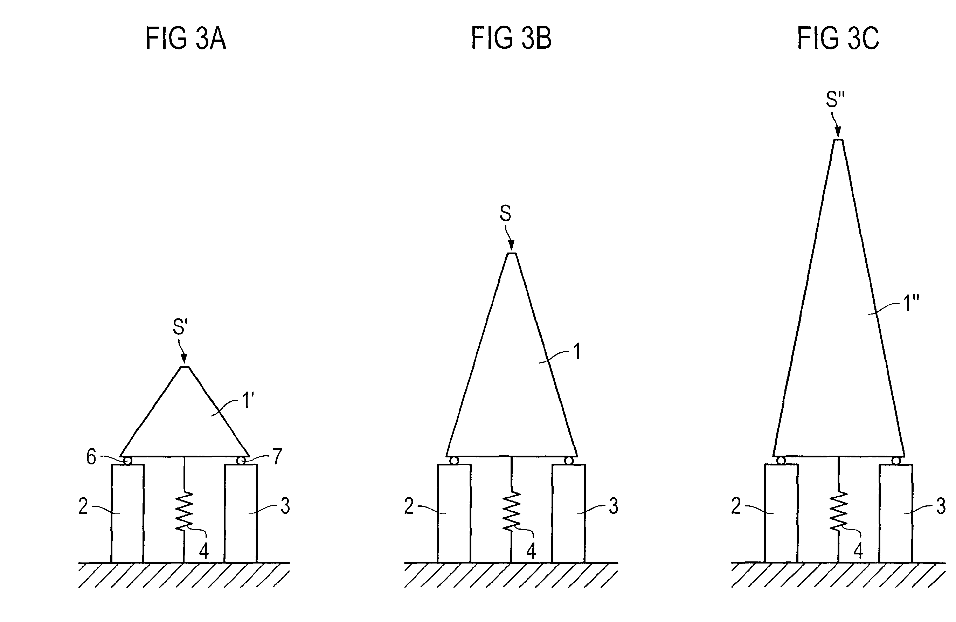

Die Figuren 3a bis 3c zeigen jeweils einen Stellantrieb 1,1',1"analog zu Figur 1, bei dem nun die Längen der schrägen Seiten des Transmitterkörpers 1,1",1" verschieden ausgeführt sind.

Figur 3b zeigt einen Stellantrieb 1, der dem Stellantrieb 1 aus Figur 1 entspricht.

Figur 3a zeigt im Gegensatz dazu einen Stellantrieb, der einen Transmitterkörper 1' mit verkürzten Schrägseiten zur Änderung des Verhältnisses von Höhe zu Breite aufweist. Dadurch ergibt sich im Vergleich zum Stellantrieb in Figur 3b eine höhere Kraftübertragung und eine kleinere Drehzahl an der Antriebsspitze S'. Zur Sicherstellung des Friktionskontaktes bei höherer Kraftübertragung ist die Antriebsspitze S' zudem breiter ausgeführt als in Figur 3b.

Figur 3c zeigt einen Stellantrieb, der einen Transmitterkörper 1" mit verlängerten Schrägseiten aufweist. Dadurch ergibt sich im Vergleich zum Stellantrieb in Figur 3b eine reduzierte Kraftübertragung bei hoher Drehzahl.

Aus den Figuren 3a bis 3c ergibt sich, daß die maximale Drehgeschwindigkeit / Drehmoment der Antriebsspitze S,S',S" durch eine Wahl der Geometrie des Transmitterkörpers 1,1',1" flexibel einstellbar ist. Daher wird der Stellantrieb, beispielsweise durch einfaches Auswechseln des Transmitterkörpers 1,1',1", problemlos skalierbar. So wird der Aufwand zur Anpassung an verschiedene Antriebssituationen sehr klein, und eine Anpassung der Motoren an die benötigte Drehzahl bzw. das Drehmonent oder einen Linearvorschub möglich.

Außer einer Änderung der Abmessungen des Transmitterkörpers 1,1',1" eine Form des Transmitterkörpers 1,1',1" verändert werden. Beispielsweise kann ein Transmitterkörper 1,1',1" mit unterschiedlicher Antriebsspitze S,S', S" eingesetzt werden, wie ein Vergleich zwischen Figur 3a und 3b zeigt. Auch kann ein Transmitterkörper 1,1',1" mit unterschiedlicher Form der Querschnittsfläche, z. B. eckig, rund, angefast oder auch beliebig geformt eingesetzt werden.

Dies ist z. B. sinnvoll, wenn der Stellantrieb von einem bidirektionalen Antrieb (links/rechts) auf einen unidirektionalen Antrieb (nur links / nur rechts) umgestellt werden soll.

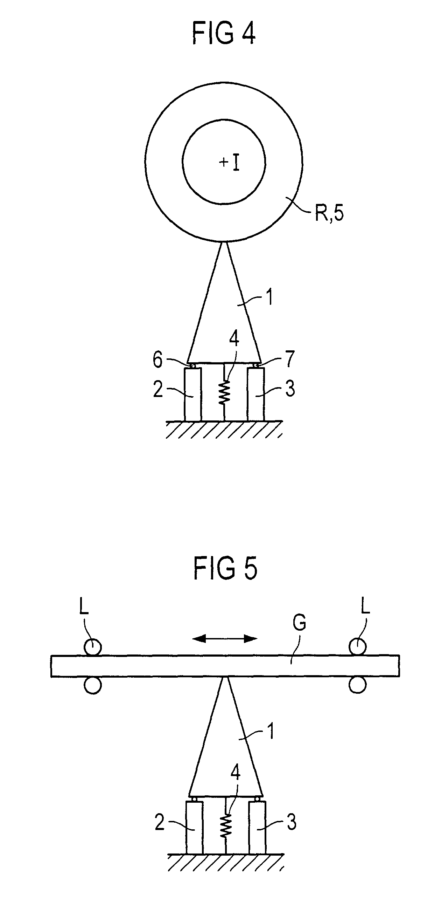

Figur 4 zeigt als Schnittdarstellung in Seitenansicht einen rotatorische Motor analog zu Figur 1, bei dem der Rotor R in Form einer um ihre Längsachse I drehbar gelagerten Welle ausgeführt ist.

Der Rotor R steht, wie auch andere Abtriebskörper 5, in Anwendungen üblicherweise unter Belastung. Dadurch kann auf ihn ein nicht unerhebliches rücktreibendes Drehmoment ausgeübt werden. Demgegenüber steht der nur intermittierend erfolgende Antrieb durch den Stellantrieb 1. In einem Teil der Fälle reicht das Trägheitsmoment des Rotors R aus, um ein Rückdrehen während der Öffnungsphase des Friktionskontaktes zu vermeiden. Falls die nicht der Fall ist (z.B. bei sehr langsamdrehenden und/oder stark belasteten Motoren), kann:

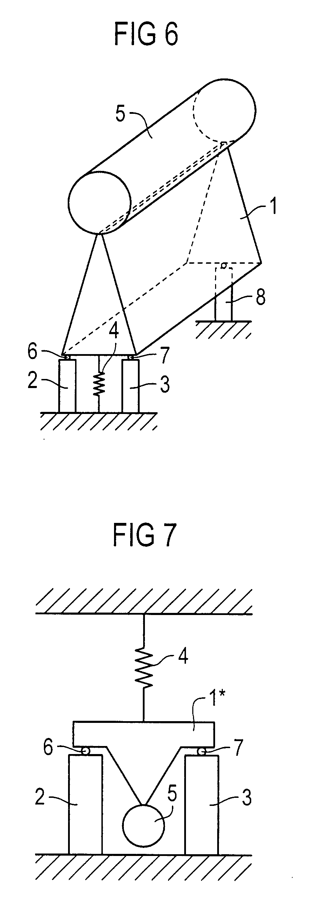

- entweder mindestens ein zweiter Stellantrieb eingesetzt werden, der einen um 180° phasenverschobenen Antrieb des Rotor S bewirkt, oder
- mittels eines weiteren Aktuators 8, oder einer anderen Bremse, der Rotor R in der Öffnungsphase arretiert werden. Eine solche Ausgestaltung eines Motors zeigt z. B. Figur 6.

Die gleichen Überlegungen gelten auch für einen Linearmotor.

Figur 5 zeigt in Seitenansicht einen Linearmotor, bei dem mittels des elektromechanischen Stellantriebs eine Linearbewegung in x-Richtung (symbolisiert durch den Pfeil) eines allgemeinen Gestänges G, das durch zwei Lager L geführt wird, realisierbar ist. Das Gestänge G kann zum Beispiel eine Welle sein oder ein flaches Band. Auch ist es möglich, an einen Abtriebskörper (5,R,S) mehrere Stellantriebe angreifen zu lassen, beispielsweise zur Verstärkung des Drehmoments oder zur gleichzeitigen Dreh- und Linearbewegung.

Figur 6 zeigt in Schrägansicht ein Ausbildung eines Motors für die Realisierung langsam drehender und stark belasteter Antriebe. Die beiden Aktuatoren 2,3 bewirken wie oben beschrieben die Drehung des Abtriebkörpers R, der in Form einer Walze vorliegt. Ein zusätzlicher Aktuator 8 wird zur Arretierung während des am vorderen Ende geöffneten Friktionskontaktes eingesetzt.

Figur 7 zeigt als Schnittdarstellung in Seitenansicht auf die (x,y)-Ebene eine weitere Ausführungsform eines Motors, bei dem ein Abtriebskörper 5 in Form einer Welle mittels eines elektromechanischen Stellantriebs zu einer Drehbewegung anregbar ist.

Im Gegensatz zum Motor aus Figur 1 ist führt die Welle 5 nun aus Gründen der Platzersparnis zwischen den Aktuatoren 2,3 hindurch. Der Transmitterkörper 1* wird durch ein unter Druckspannung gehaltenes Federelement 4 auf die Übertragerelemente 6,7 gedrückt.

## Patentansprüche

1. Elektromechanischer Stellantrieb, aufweisend

- mindestens einen ersten elektromechanischen Aktuator (2) und einen davon räumlich getrennten zweiten elektromechanischen Aktuator (3),

- einen Transmitterkörper (1), der auf den Aktuatoren (2,3) aufsitzt,

wobei ein Hub ($dl_2$,$dl_3$) der Aktuatoren (2,3) in Richtung des Transmitterkörper (1) steuerbar ist.

2. Elektromechanischer Stellantrieb nach Anspruch 1, bei dem die Aktuatoren (2,3) nach einem magnetostriktiven, einem elektrostriktiven oder insbesondere einem piezoelektrischen Prinzip antreibbar sind.

3. Elektromechanischer Stellantrieb nach Anspruch 2, bei dem die Aktuatoren (2,3) in Form eines Vielschicht-Piezoaktors vorliegen.

4. Elektromechanischer Stellantrieb nach Anspruch 3, bei dem die Aktuatoren (2,3) unter einer Druckvorspannung stehen.

5. Elektromechanischer Stellantrieb nach Anspruch 4, bei dem der Transmitterkörper (1) mittels eines Federelementes (4) auf die Aktuatoren (2,3) gedrückt wird.

6. Elektromechanischer Stellantrieb nach einem der vorhergehenden Ansprüche, bei dem der Transmitterkörper (1) eine keilförmige Querschnittsfläche aufweist, wobei er mit einer Bodenfläche (B) auf den Aktuatoren (2,3) aufsitzt.

7. Elektromechanischer Stellantrieb nach Anspruch 4, bei dem die der Bodenfläche (B) gegenüberliegende Antriebssspitze (S) abgeflacht ist.

8. Elektromechanischer Stellantrieb nach einem der vorhergehenden Ansprüche, bei dem zwischen den Aktuatoren (2,3) und dem Transmitterkörper (1) jeweils ein Übertragerelement (6,7) zur verbesserten Kontaktauflage vorhanden ist.

9. Motor, aufweisend einen elektromechanischen Stellantrieb nach einem der vorhergehenden Ansprüche 1 bis 8, bei dem eine Bewegung eines Abtriebskörpers (5) mittels einer durch einen Friktionskontakt übertragenen Bewegung des Transmitterkörpers (1) steuerbar ist.

10. Motor nach Anspruch 9, bei dem der Abtriebskörper (5) mittels der durch den Friktionskontakt übertragenen Bewegung des Transmitterkörpers (1) drehbar ist.

11. Motor nach Anspruch 9 oder 10, bei dem der Abtriebskörper (5) mittels der durch den Friktionskontakt übertragenen Bewegung des Transmitterkörpers (1) linearverschiebbar ist.

12. Verfahren zum Betrieb des Stellantriebs nach einem der Ansprüche 1 bis 8, bei dem ein Hub ($dl_2$) des ersten Aktuators (2) und ein Hub ($dl_3$) des zweiten Aktuators (3) jeweils periodisch verändert wird.

13. Verfahren nach Anspruch 12, bei dem der Hub ($dl_2$) des ersten Aktuators (2) gemäß der Gleichung

$$dl_2 = dl_0 \cdot \sin(\omega \cdot t)$$

eingestellt wird, und der Hub ($U_3$) des zweiten Aktuators (3) gemäß der Gleichung

$$dl_3 = dl_0 \cdot \sin(\omega \cdot t + \phi)$$

eingestellt wird, wobei $dl_0$ eine Amplitude, $\omega$ eine Kreisfrequenz und $\phi$ einen Phasenwinkel darstellt.

14. Verfahren nach Anspruch 13, bei dem der Phasenwinkel ($\phi$) 180° oder -180° beträgt.

## FIG 1

## FIG 2

$\Phi = 180°$      $\Phi = 90°$   $\Phi = 0°$   $\Phi = -90°$      $\Phi = -180°$

FIG 3A

S'

1'

6    7

2    3

4

FIG 3B

S

1

2    3

4

FIG 3C

S"

1"

2    3

4

EP 1 152 522 A2

9

## FIG 4

## FIG 5

## FIG 6

## FIG 7